# EUROPÄISCHE PATENTSCHRIFT

(11) **EP 2 831 148 B1**
(45) Veröffentlichungstag und Bekanntmachung des Hinweises auf die Patenterteilung: **23.03.2016**
(21) Anmeldenummer: 13713154.6
(22) Anmeldetag: 26.03.2013
(51) Int. Cl.: C08G 75/23, C08L 81/06, F16L 11/08

(54) **ROHRE UND VERBINDUNGSSTÜCKE AUS POLYBIPHENYLETHERSULFON-POLYMEREN ZUR LEITUNG VON GASEN**
PIPES AND CONNECTING PIECES MADE OF POLY(BIPHENYL ETHER SULFONE) POLYMERS FOR CONDUCTING GASES
TUBE ET PIÈCE DE RACCORD EN POLYMÈRE DE POLYBIPHÉNYLE ÉTHERSULFONE POUR L'ACHEMINEMENT DE GAZ

(30) Priorität: 28.03.2012 EP 12161801
(43) Veröffentlichungstag der Anmeldung: 04.02.2015
(73) Patentinhaber: BASF SE, 67056 Ludwigshafen (DE)
(72) Erfinder: SCHMID, Jochen, 69221 Dossenheim (DE); EHRET, Frank, 67133 Maxdorf (DE); MALETZKO, Christian, 67122 Altrip (DE)
(86) Internationale Anmeldenummer: PCT/EP2013/056381
(87) Internationale Veröffentlichungsnummer: WO 2013/144133

(56) Entgegenhaltungen:
- WO-A1-99/67561
- WO-A1-2010/112508
- WO-A2-2004/016419

## Beschreibung

Die vorliegende Erfindung betrifft die Verwendung einer thermoplastischen Formmasse enthaltend mindestens ein Polybiphenylethersulfon-Polymer zur Herstellung von selbsttragenden Formteilen zur Leitung von Gasen.

Rohrleitungssysteme setzen sich üblicherweise aus selbsttragenden Formteilen wie Rohrstücken, Verbindungsstücken und Rohrleitungsarmaturen zusammen.

Rohrleitungssysteme dienen dem Transport von riesel- oder pumpfähigen Feststoffen, Flüssigkeiten und Gasen. Die Anforderungen an ein Rohrleitungssystem richten sich nach dem zu transportierenden Medium. Insbesondere beim Transport von Gasen werden hohe Anforderungen an die Dichtigkeit des Rohrleitungssystems gestellt.

Als Materialien für Rohrleitungssysteme werden üblicherweise metallische Materialien wie Temperguss, Messing, Rotguss, Kupfer und Stahl eingesetzt. Um Rohrleitungssysteme aus metallischen Materialien vor Korrosion zu schützen, werden diese Rohrleitungssysteme teilweise von innen mit einem Kunststoff ausgekleidet. Solche Auskleidungen werden auch als "Liner" bezeichnet. (siehe auch WO-A-2004016419). In diesen

Rohrleitungssystemen werden die Liner lediglich als Korrosionsschutz verwendet. Die Liner werden in diesen Rohrleitungssystemen nicht verwendet, um eine tragende Funktion zu erfüllen. Diese Liner sind somit nicht selbsttragend. Die Liner werden zudem nicht verwendet, um die Dichtigkeit dieser Rohrleitungssysteme zu erhöhen. In Rohrleitungssystemen, die Liner aufweisen, erfüllt somit das metallische Material (die Ummantelung) die tragende Funktion. Das metallische Material wird in solchen Rohrleitungssystemen zudem verwendet, um die Dichtigkeit des Rohrleitungssystems zu gewährleisten. Rohrleitungssysteme aus metallischen Materialien, die einen Liner enthalten, sind korrosionsbeständig und zur Leitung von Gasen geeignet. Diese Rohrleitungssysteme sind jedoch teuer.

Um günstigere Rohrleitungssysteme bereitzustellen, wurden selbsttragende Rohrleitungssysteme aus Kunststoffen entwickelt. Bei diesen selbsttragenden Rohrleitungssystemen wir die Dichtigkeit und die selbsttragende Funktion allein durch den Kunststoff erreicht. Solche selbsttragenden Rohrleitungssysteme weisen daher keine Ummantelung aus einem metallischen Material auf.

In den vergangenen Jahren haben für den Transport von Gasen selbsttragende Rohrleitungssysteme aus Kunststoffen zunehmend an Bedeutung gewonnen. Als Kunststoffe kommen dabei derzeit Polyethylen (PE), vernetztes Polyethylen (PEX) und Polyamide (PA) zum Einsatz.

Selbsttragende Formteile wie Rohrstücke und Verbindungsstücke für Rohrleitungssysteme aus Kunststoff werden üblicherweise aus Formmassen durch formgebende Verfahren gefertigt. Bei den formgebenden Verfahren wird die Formmasse unter Einwirkung mechanischer Kräfte innerhalb eines bestimmten Temperaturbereichs geformt. Geeignete formgebende Verfahren sind beispielsweise Spritzgießen, Extrusion oder Pressen.

Rohrleitungssysteme aus Kunststoffen haben gegenüber Rohrleitungssystemen aus metallischen Materialien den Vorteil, dass sie aufgrund ihrer mechanischen Materialeigenschaften wesentlich einfacher installiert werden können. Die vorstehend genannten Kunststoffe zeigen im Hinblick auf die Installationseigenschaften für Rohrleitungssysteme zufriedenstellende Eigenschaften.

Im Hinblick auf die Dichtigkeit, insbesondere beim Transport von Gasen, besteht jedoch noch Raum für Verbesserungen. Dies gilt insbesondere für die Verbindungsstellen, an denen zwei Rohrstücke über ein Verbindungsstück miteinander verbunden werden.

Bei der Verwendung von Rohrleitungssystemen aus den vorstehend genannten Kunststoffen treten, insbesondere beim Einsatz in unbelüfteten oder schlechtbelüfteten Bereichen, häufig Probleme auf. Beim Transport von odorierten Gasen, wie Erdgas und anderen Brenngasen, kann es durch die auftretende Geruchsbelästigung zur Auslösung von Fehlalarmen kommen. Im schlimmsten Fall können sich beim Transport von brennbaren Gasen explosionsfähige Gasgemische bilden.

Die der vorliegenden Erfindung zugrundeliegende Aufgabe besteht somit in der Bereitstellung von selbsttragenden Formteilen für Rohrleitungssysteme zur Leitung von Gasen, die gegenüber den bekannten Rohrleitungssystemen eine erhöhte Dichtigkeit aufweisen. Die selbsttragenden Formteile sollen darüber hinaus gegenüber den im Stand der Technik beschriebenen selbsttragenden Formteilen vergleichbare oder verbesserte mechanische Materialeingenschaften aufweisen.

Gelöst wird die Aufgabe durch die erfindungsgemäße Verwendung einer thermoplastischen Formmasse, die mindestens ein Polybiphenylethersulfon-Polymer enthält, zur Herstellung von selbsttragenden Formteilen zur Leitung von Gasen.

Es wurde überraschend gefunden, dass bei der erfindungsgemäßen Verwendung der thermoplastischen Formmasse selbsttragende Formteile erhältlich sind, die zur Konstruktion von Rohrleitungssystemen zur Leitung von Gasen geeignet sind. Die selbsttragenden Formteile und die daraus konstruierten Rohrleitungssysteme weisen gegenüber den im Stand der Technik beschriebenen Systemen eine erhöhte Dichtigkeit auf. Die selbsstragenden Formteile weisen darüber hinaus sehr gute mechanische Materialeigenschaften auf. Sie zeichnen sich insbesondere durch gute Schlagzähigkeit und gute Chemikalienbeständigkeit aus. Bei der Verwendung der selbsstragenden Formteile zur Konstruktion von Rohrleitungssystemen für Gase kann zudem die Auslösung von Fehlalarmen und die Bildung explosionsfähiger Gasgemische zuverlässig verhindert werden.

Die erfindungsgemäß verwendeten Formmassen enthalten mindestens ein Polybiphenylethersulfon-Polymer.

Bevorzugte Formmassen enthalten mindestens ein Polybiphenylethersulfon-Polymer, das hergestellt wird durch Polykondensation umfassend gemäß Schritt (a) die Umsetzung einer Komponente (a1), die mindestens eine aromatische Dihydroxyverbindung enthält, mit einer Komponente (a2), die mindestens eine aromatische Sulfonverbindung mit zwei Halogensubstituenten enthält, wobei die Komponente (a1) 4,4'-Dihydroxybiphenyl umfasst.
Unter Polybiphenylethersulfon-Polymer sollen im Rahmen der vorliegenden Erfindung Polyarylenethersulfone verstanden werden, welche 4,4'-Dihydroxybiphenyl als Monomereinheit umfassen. Polybiphenylethersulfon selbst ist auch als Polyphenylsulfon bekannt, wird als PPSU bezeichnet, und ist aus den Monomereinheiten 4,4'-Dichlordiphenylsulfon und 4,4'-Dihydroxybiphenyl aufgebaut.

Herstellungsverfahren, die die vorstehend genannten Polybiphenylethersulfon-Polymere zugänglich machen, sind dem Fachmann an sich bekannt. Herstellungsverfahren sind beispielsweise in WO 2010/142585, WO 2011/020823 und WO 2010/112508 beschrieben.

Nachfolgend werden bevorzugte Polybiphenylethersulfon-Polymere beschrieben.

Im Rahmen der vorliegenden Erfindung wird zur Charakterisierung der Struktur der Polybiphenylethersulfon-Polymere auf die eingesetzten Monomereinheiten Bezug genommen. Es ist für den Fachmann offensichtlich, dass die Monomereinheiten im Polymer in umgesetzter Form vorliegen und dass die Umsetzung der Monomereinheiten durch nucleophile aromatische Polykondensation unter rechnerischer Abspaltung einer Einheit Halogenwasserstoff als Abspaltungsgruppe erfolgt. Folglich ist die Struktur des resultierenden Polybiphenylethersulfon-Polymers unabhängig von der genauen Art der Abspaltungsgruppe.

Bevorzugt sind Polybiphenylethersulfon-Polymere, die durch Umsetzung der Komponenten a1) und a2) in Gegenwart eines organischen Lösungsmittels zugänglich sind. Bevorzugt enthält das organische Lösungsmittel N-Methylpyrrolidon. Ausschließlich N-Methylpyrrolidon ist als Lösungsmittel ganz besonders bevorzugt. N-Methylpyrrolidon trägt gleichzeitig zu einem hohen Umsatz der Komponenten (a1) und (a2) bei, da die Reaktion der erfindungsgemäß zum Einsatz kommenden Monomere besonders effizient verläuft.

Die Umsetzung der Komponenten (a1) und (a2) zu einem Polybiphenylethersulfon-Polymer ist dem Fachmann in Bezug auf die Temperatur, das Lösungsmittel und die Zeitdauer an sich bekannt. Die Umsetzung der Ausgangsverbindungen (a1) und (a2) wird bei einer Temperatur von 80 bis 250°C, bevorzugt 100 bis 220°C durchgeführt, wobei die Obergrenze der Temperatur bei einer Synthese unter Umgebungsdruck durch den Siedepunkt des Lösungsmittels begrenzt wird. Die Umsetzung erfolgt vorzugsweise in einem Zeitintervall von 2 bis 12 h, insbesondere von 3 bis 8 h.

Das molare Verhältnis der eingesetzten Komponenten (a1) zu (a2) kann im Bereich von 1,00 zu 1,10 bis 1,10 zu 1,00 liegen, bevorzugt im Bereich von 1,00 zu 1,05 bis 1,05 zu 1,00, mehr bevorzugt im Bereich von 1,00 zu 1,02 bis 1,02 zu 1,00.

Besonders bevorzugt sind jedoch Polybiphenylethersulfon-Polymere, zu deren Herstellung ein Überschuss der Komponente (a1) eingesetzt wird. Dies trägt dazu bei, insbesondere bei hohen Umsätzen den Gehalt an polymergebundenem Chlor zu reduzieren. Das molare Verhältnis der eingesetzten Komponenten (a1) zu (a2) beträgt vorzugsweise von 1,005 bis 1,1, mehr bevorzugt 1,005 bis 1,05. In einer besonders bevorzugten Ausführungsform beträgt das molare Verhältnis der Komponenten (a1) zu (a2) von 1,005 bis 1,035, insbesondere von 1,01 bis 1,03, ganz besonders bevorzugt von 1,015 bis 1,025. Hierdurch lässt sich das Molekulargewicht besonders effektiv steuern und kontrollieren.

Bevorzugt sind Polybiphenylethersulfon-Polymere bei deren Herstellung die Reaktionsbedingungen so gewählt werden, dass der Umsatz (U) mindestens 90 %, insbesondere mindestens 95 %, besonders bevorzugt mindestens 98 % beträgt. Unter Umsatz U wird im Rahmen der vorliegenden Erfindung der molare Anteil der umgesetzten reaktiven Gruppen (d. h. Hydroxy- und Halogengruppen) verstanden. Das so erhaltene Polybiphenylethersulfon-Polymer weist eine mehr oder weniger breite Molekulargewichtsverteilung ggf. einschließlich von Oligomeren auf, wobei die Endgruppen entweder Halogen-, bevorzugt Chlor-, oder Hydroxygruppen, beziehungsweise im Fall der weiteren Umsetzung Alkyl- oder Aryloxygruppen, darstellen und rechnerisch dem von 100 % abweichenden Umsatz entsprechen.

Bevorzugt sind Polybiphenylethersulfon-Polymere bei deren Herstellung Komponente (a1) aus mindestens einer aromatischen Dihydroxyverbindung besteht, die 4,4'-Dihydroxybiphenyl umfasst. Darüber hinaus kann Komponente (a1) insbesondere folgende Verbindungen umfassen:
- Dihydroxybenzole, insbesondere Hydrochinon und/oder Resorcin;
- Dihydroxynaphthaline, insbesondere 1,5-Dihydroxynaphthalin, 1,6-Dihydroxynaphthalin, 1,7- Dihydroxynaphthalin, und/oder 2,7-Dihydroxynaphthalin;
- Andere Dihydroxybiphenyle als 4,4'-Dihydroxybiphenyl, insbesondere 2,2'-Dihydroxybiphenyl;
- Bisphenylether, insbesondere Bis(4-hydroxyphenyl)ether und Bis(2-hydroxyphenyl)ether;
- Bisphenylpropane, insbesondere 2,2-Bis(4-hydroxyphenyl)propan, 2,2-Bis(3-methyl-4-hydroxyphenyl)propan, und/oder 2,2-Bis(3,5-dimethyl-4-hydroxyphenyl)propan;
- Bisphenylmethane, insbesondere Bis(4-hydroxyphenyl)methan
- Bisphenylcyclohexane, insbesondere Bis(4-hydroxyphenyl)-2,2,4-trimethylcyclohexan;
- Bisphenylsulfone, insbesondere Bis(4-hydroxyphenyl)sulfon;
- Bisphenylsulfide, insbesondere Bis(4-hydroxyphenyl)sulfid;
- Bisphenylketone, insbesondere Bis(4-hydroxyphenyl)keton;
- Bisphenylhexafluoropropane, insbesondere 2,2-Bis(3,5-dimethyl-4-hydroxyphenyl)hexafluoropropan; und/oder
- Bisphenylfluorene, insbesondere 9,9-Bis(4-hydroxyphenyl)fluoren.

Vorzugsweise enthält die Komponente (a1) mindestens 50, insbesondere mindestens 60, besonders bevorzugt mindestens 80 Gew.-% 4,4'-Dihydroxybiphenyl, jeweils bezogen auf das Gesamtgewicht der Komponente (a1). Ganz besonders bevorzugt besteht die Komponente (a1) aus 4,4'-Dihydroxybiphenyl.

Weiter bevorzugt sind Polybiphenylethersulfon-Polymere, bei deren Herstellung als Komponente (a2) mindestens eine aromatische Sulfonverbindung mit zwei Halogensubstituenten eingesetzt wird, die ausgewählt ist aus der Gruppe bestehend aus Dihalogendiphenylsulfone wie 4,4'-Dichlordiphenylsulfon, 4,4'-Difluordiphenylsulfon, 4,4'-Dibromdiphenylsulfon, Bis(2-chlorophenyl)sulfone, 2,2'-Dichlordiphenylsulfon und 2,2'-Difluordiphenylsulfon.

Vorzugsweise wird Komponente (a2) ausgewählt aus 4,4'-Dihalogendiphenylsulfonen, insbesondere 4,4'-Dichlordiphenylsulfon und/oder 4,4'-Difluordiphenylsulfon.

In einer ganz besonders bevorzugten Ausführungsform ist Komponente (a2) 4,4'-Dichlordiphenylsulfon.

Bevorzugte Polybiphenylethersulfon-Polymere weisen Einheiten der Formel (I) 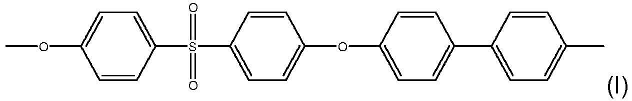 auf.

Das Polybiphenylethersulfon-Polymer kann darüber hinaus weitere Einheiten ausgewählt aus den Einheiten der Formeln (II) und (III) 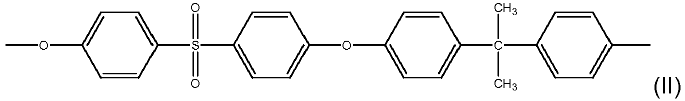 und 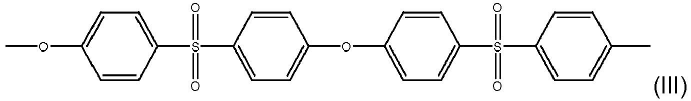 enthalten.

Bevorzugt enthält das Polybiphenylethersulfon-Polymer mindestens 50 %, bevorzugt mindestens 60 %, mehr bevorzugt mindestens 70 % und insbesondere mindestens 80 % der Einheit der Formel (I), jeweils bezogen auf das Gesamtzahl der im Polybiphenylethersulfon-Polymer enthaltenen Einheiten der Formeln (I), (II) und (III).

Besonders bevorzugt ist ein Polybiphenylethersulfon-Polymer, das herstellbar ist durch Polykondensation von 4,4'-Dihydroxybiphenyl (a1) mit 4,4'-Dichlordiphenylsulfon (a2).

Die Umsetzung der Komponenten (a1) und (a2) erfolgt vorzugsweise in Gegenwart einer Base (B), um die Reaktivität gegenüber den Halogensubstituenten der Ausgangsverbindungen (a2) zu erhöhen. Es ist bevorzugt ausgehend von den vorgenannten aromatischen Dihydroxyverbindungen (a1) durch Zugabe einer Base (B) ihre Dikalium- oder Dinatriumsalze herzustellen und mit der Komponente (a2) zur Reaktion zu bringen. Geeignete Basen (B) sind dem Fachmann bekannt. Bevorzugte Basen sind insbesondere Alkalimetallcarbonate.

Vorzugsweise sind die Basen wasserfrei. Geeignete Basen sind insbesondere wasserfreies Alkalimetallcarbonat, vorzugsweise Natrium-, Kalium-, Calciumcarbonat oder Mischungen davon, wobei Kaliumcarbonat ganz besonders bevorzugt ist. Eine besonders bevorzugte Kombination ist N-Methyl-2-pyrrolidon als Lösungsmittel und wasserfreies Kaliumcarbonat als Base.

Es hat sich zudem als vorteilhaft herausgestellt, im Rahmen von Schritt (a) die Menge des Polybiphenylethersulfon-Polymers bezogen auf das Gesamtgewicht der Mischung aus Polybiphenylethersulfon-Polymer und Lösungsmittel von 10 bis 70 Gew.-%, vorzugsweise von 15 bis 50 Gew.-% einzustellen.

In einer weiteren Ausführungsform wird während oder nach der Umsetzung mindestens eine aromatische organische Monochlorverbindung als Komponente (a3) zugegeben. Es besteht die Vorstellung, dass die aromatische organische Monochlorverbindung als Kettenregler fungiert. Vorzugsweise weist die aromatische organische Monochlorverbindung eine ähnliche Reaktivität im Rahmen der Umsetzung auf wie die Komponente (a2).

Vorzugsweise ist die Komponente (a3) ein aromatisches Monochlorsulfon, insbesondere Monochlordiphenylsulfon. In einer bevorzugten Ausführungsform wird der Überschuss der Komponente (a1) durch die aromatische organische Monochlorverbindung (a3) ausgeglichen, welche eine unter den Bedingungen der Umsetzung der Komponenten (a1) und (a2) reaktive Chlorgruppe enthält.

Die molare Menge der Komponente (a3) wird vorzugsweise so gewählt, dass das Doppelte des Überschusses der molaren Menge der Komponente (a1) gegenüber der molaren Menge der Komponente (a2) im Verhältnis zur molaren Menge der Komponente (a3) von 0,98 bis 1,02, insbesondere von 0,99 bis 1,01 beträgt. Demgemäß beträgt 2*((a1) - (a2)) / (a3) vorzugsweise von 0,98 bis 1,02, insbesondere von 0,99 bis 1,01, wobei (a1), (a2) und (a3) die eingesetzten molaren Mengen der jeweiligen Komponente widerspiegeln.

Das Doppelte des Verhältnisses ((a1) - (a2) / (a3)) beträgt dabei vorzugsweise 1.

In einer weiteren bevorzugten Ausführungsform, die mit den vorgenannten Ausführungsformen vorteilhaft verknüpft werden kann, erfolgt in Anschluss an Schritt (a) gemäß Schritt (b) eine Umsetzung mit mindestens einer aliphatischen organischen Halogenverbindung. Hierdurch werden reaktive Hydroxy-Endgruppen weiter umgesetzt und so ein Abbau der Polymerkette verhindert.

Bevorzugte aliphatische organische Halogenverbindungen sind Alkylhalogenide, insbesondere Alkylchloride mit linearen oder verzweigten Alkylgruppen mit 1 bis 10 Kohlenstoffatomen, insbesondere primäre Alkylchloride, besonders bevorzugt Methylhalogenid, insbesondere Methylchlorid.

Die Umsetzung gemäß Schritt (b) wird vorzugsweise bei einer Temperatur von 90° bis 160°C, insbesondere von 100°C bis 150°C durchgeführt. Die Zeitdauer kann über einen weiten Zeitraum variieren und beträgt üblicherweise mindestens 5 Minuten, insbesondere mindestens 15 Minuten. Vorzugsweise beträgt die Zeitdauer der Umsetzung gemäß Schritt (b) von 15 Minuten bis 8 Stunden, insbesondere von 30 Minuten bis 4 Stunden.

Die Zugabe der aliphatischen organischen Halogenverbindung kann über verschiedene Methoden erfolgen. Darüber hinaus kann die Zugabe aliphatische organische Halogenverbindung stöchiometrisch oder im Überschuss erfolgen, wobei der Überschuss beispielsweise bis zu 5-fach sein kann. In einer bevorzugten Ausführungsform erfolgt die Zugabe der aliphatischen organischen Halogenverbindung kontinuierlich, insbesondere durch kontinuierliche Zuführung als Gasstrom.

Es hat sich als vorteilhaft erwiesen, in Anschluss an Schritt (a) und ggf. Schritt (b) eine Filtration der Polymerlösung durchzuführen. Hierdurch wird der bei der Polykondensation gebildete Salzanteil sowie eventuell gebildete Gelkörper entfernt.

Zur Gewinnung des Polybiphenylethersulfon-Polymers in Reinform kann die Polymerlösung weiter aufgearbeitet werden. Beispielsweise durch Abtrennung des Lösungsmittels durch bekannte Verfahren wie Sprühtrocknung oder durch Ausfällen des Polymers beispielsweise durch tropfenweisen Eintrag der Polymerlösung in Wasser.

Das in der erfindungsgemäß verwendeten Formmasse enthaltene Polybiphenylethersulfon-Polymer weist im Allgemeinen gewichtsmittlere Molekulargewichte M_{w} im Bereich von 20.000 bis 90.000 g/mol, bevorzugt im Bereich von 30.000 bis 70.000 g/mol und besonders bevorzugt im Bereich von 40.000 bis 50.000 g/mol auf. Die Bestimmung des Molekulargewichtes kann mit mittels Gelpermeationschromatographie erfolgen, wobei bevorzugt DMAc mit 0,5% LiBr als Lösemittel bzw. mobile Phase eingesetzt und bei 80°C gegen Polymethylacrylat (PMMA) definierter Molekulargewichte gemessen wird.

Das Polybiphenylethersulfon-Polymer zeichnet sich darüber hinaus durch eine nominelle Bruchdehnung im Zugversuch, gemäß ISO 527-2 bei einer Abzugsgeschwindigkeit (v) von 50mm/min, von mehr als 40 % aus.

Das Polybiphenylethersulfon-Polymer weist bei 23°C eine Kerbschlagzähigkeit gemäß ISO 179-1eA von mindestens 35 kJ/m² , vorzugsweise von mindestens 45 kJ/m², und besonders bevorzugt von mindestens 60 kJ/m² auf.

Darüber hinaus zeichnet sich das Polybiphenylethersulfon-Polymer durch sehr gute Chemikalienbeständigkeit aus.

Überraschenderweise wurde gefunden, dass das Polybiphenylethersulfon-Polymer eine gegenüber den im Stand der Technik beschriebenen Kunststoffen deutlich verringerte Gaspermeabilität aufweist (Gaspermeabilität gemessen an einem Gerät der Firma Brugger nach DIN 536380) und zudem hervorragende mechanische Eigenschaften aufweisen.

Die erfindungsgemäß verwendeten thermoplastischen Formmassen können neben dem Polybiphenylethersulfon-Polymer weitere Polymere enthalten. Geeignete weitere Polymere sind ausgewählt aus der Gruppe bestehend aus Polyethersulfon (PESU), Polysulfon (PSU), sowie Polyetherimiden, Polyphenylensulfiden, Polyetheretherketonen, Polyimiden und Poly-p-phenylenen.

Als weitere Polymere sind Polysulfon (PSU) und/oder Polyethersulfon (PESU) besonders bevorzugt.

Der Gehalt an weiteren Polymeren in der erfindungsgemäß verwendeten Formmasse beträgt im Allgemeinen maximal 30 Gew.-%, bevorzugt maximal 20 Gew.-%, besonders bevorzugt maximal 10 Gew.-%, jeweils bezogen auf das Gesamtgewicht der in der Formmasse enthaltenen Polymere.

Die erfindungsgemäß verwendeten Formmassen können darüber hinaus Füllstoffe, insbesondere Fasern, besonders bevorzugt Glasfasern enthalten. Entsprechende Füllstoffe sind dem Fachmann bekannt. Sofern Füllstoffe zum Einsatz kommen, werden diese vorzugsweise in einer Menge von 5 bis 150 Gewichtsteilen bezogen auf 100 Gewichtsteile Polymer zugegeben.

In den erfindungsgemäßen thermoplastischen Formmassen können insbesondere alle dem Fachmann bekannten und für den Einsatz in thermoplastischen Formmassen geeigneten Glasfasern vorliegen. Diese Glasfasern können nach dem Fachmann bekannten Verfahren hergestellt und gegebenenfalls oberflächenbehandelt werden. Die Glasfasern können zur besseren Verträglichkeit mit dem Matrixmaterial mit einer Schlichte, ausgerüstet sein, wie z.B. in DE 10117715 beschrieben.

In einer bevorzugten Ausführungsform werden Glasfasern mit einem Durchmesser von 5 bis 15 µm, bevorzugt 7 bis 13 µm, besonders bevorzugt 9 bis 11 µm eingesetzt.

Die Einarbeitung der Glasfasern kann sowohl in Form von Schnittglasfasern als auch in Form von Endlossträngen (Rovings) erfolgen. Die Länge der einsetzbaren Glasfasern beträgt in der Regel vor Einarbeitung als Schnittglasfasern in die thermoplastischen Formmassen typischerweise 4 bis 5 mm. Nach der Verarbeitung der Glasfasern, beispielsweise durch Co-Extrusion, mit den anderen Komponenten liegen die Glasfasern üblicherweise in einer mittleren Länge von 100 bis 400 µm, bevorzugt 150 bis 250 µm vor.

Die erfindungsgemäßen Formmassen können als weitere Komponente K Hilfsstoffe, insbesondere Verarbeitungshilfsmittel, Pigmente, Stabilisatoren, Flammschutzmittel oder Mischungen unterschiedlicher Additive enthalten. Übliche Zusatzstoffe sind beispielsweise auch Oxidationsverzögerer, Mittel gegen Wärmezersetzung und Zersetzung durch ultraviolettes Licht, Gleit- und Entformungsmittel, Farbstoffe und Weichmacher.

Der Anteil der weiteren Komponenten K in den erfindungsgemäßen Formmassen beträgt insbesondere von 0 bis zu 30, vorzugsweise von 0 bis zu 20 Gew.-%, insbesondere 0 bis 15 Gew.-%, bezogen auf das Gesamtgewicht der thermoplastischen Formmasse. Im Fall, dass es sich bei der Komponente K um Stabilisatoren handelt, beträgt der Anteil dieser Stabilisatoren üblicherweise bis zu 2 Gew.-%, vorzugsweise 0,01 bis 1 Gew.-%, insbesondere 0,01 bis 0,5 Gew.-%, bezogen auf das Gesamtgewicht der thermoplastischen Formmasse.

Pigmente und Farbstoffe sind allgemein in Mengen von 0 bis 10, bevorzugt von 0,05 bis 7 und insbesondere von 0,1 bis 5 Gew.-%, bezogen auf das Gesamtgewicht der thermoplastischen Formmasse enthalten.

Die Pigmente zur Einfärbung von Thermoplasten sind allgemein bekannt, siehe zum Beispiel R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen, wie Zinkoxid, Zinksulfid, Bleiweiß [2 PbCO₃·Pb(OH)₂], Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet. Schwarze Farbpigmente, die erfindungsgemäß eingesetzt werden können, sind Eisenoxidschwarz (Fe₃O₄), Spinellschwarz [Cu(Cr, Fe)₂O₄], Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird. Siehe hierzu G. Benzing, Pigmente für Anstrichmittel, Expert-Verlag (1988), Seiten 78 ff.

Zur Einstellung bestimmter Farbtöne können anorganische Buntpigmente, wie Chromoxidgrün oder organische Buntpigmente, wie Azopigmente oder Phthalocyanine eingesetzt werden. Derartige Pigmente sind allgemein im Handel üblich.

Oxidationsverzögerer und Wärmestabilisatoren, die den thermoplastischen Massen gemäß der Erfindung zugesetzt werden können, sind zum Beispiel Halogenide von Metallen der Gruppe I des Periodensystems, zum Beispiel Natrium-, Kalium-, Lithium-Halogenide, zum Beispiel Chloride, Bromide oder lodide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salzen, und Mischungen dieser Verbindungen, vorzugsweise in Konzentrationen bis zu 1 Gew.-%, bezogen auf das Gesamtgewicht der thermoplastischen Formmasse, einsetzbar.

Beispiele für UV-Stabilisatoren sind verschiedene substituierte Resorcine, Salicylate, Benzotriazole und Benzophenone, die im Allgemeinen in Mengen bis zu 2 Gew.-% eingesetzt werden.

Gleit- und Entformungsmittel, die in der Regel in Mengen bis zu 1 Gew.-% bezogen auf das Gesamtgewicht der thermoplastischen Formmasse zugesetzt werden, sind Stearylalkohol, Stearinsäurealkylester und -amide sowie Ester des Pentaerythrits mit langkettigen Fettsäuren. Es können auch Dialkylketone, zum Beispiel Distearylketon, eingesetzt werden.

Als bevorzugten Bestandteil enthalten die erfindungsgemäßen Formmassen von 0,1 bis 2, bevorzugt 0,1 bis 1,75, besonders bevorzugt 0,1 bis 1,5 Gew.-% und insbesondere von 0,1 bis 0,9 Gew.-% (bezogen auf das Gesamtgewicht der thermoplastischen Formmasse) an Stearinsäure und/oder Stearaten. Im Prinzip können auch andere Stearinsäurederivate wie Ester der Stearinsäure eingesetzt werden.

Stearinsäure wird bevorzugt durch Hydrolyse von Fetten hergestellt. Die dabei erhaltenen Produkte stellen üblicherweise Mischungen aus Stearinsäure und Palmitinsäure dar. Daher haben solche Produkte einen breiten Erweichungsbereich, zum Beispiel von 50 bis 70°C, je nach Zusammensetzung des Produkts. Bevorzugt werden Produkte mit einem Anteil an Stearinsäure von mehr als 40, besonders bevorzugt mehr als 60 Gew.-% verwendet. Es kann auch reine Stearinsäure (> 98 %) verwendet werden.

Des Weiteren können die erfindungsgemäßen Formmassen auch Stearate enthalten. Stearate können entweder durch Umsetzung entsprechender Natriumsalze mit Metallsalzlösungen (zum Beispiel CaCl₂, MgCl₂, Aluminiumsalzen) oder durch direkte Umsetzung der Fettsäure mit Metallhydroxid hergestellt werden (siehe zum Beispiel Baerlocher Additives, 2005). Bevorzugt wird Aluminiumtristearat verwendet.

Die Reihenfolge, in der die Bestandteile der erfindungsgemäßen thermoplastischen Formmasse gemischt werden, ist beliebig.

Die erfindungsgemäß verwendeten Formmassen können nach an sich bekannten Verfahren, beispielsweise durch Extrusion, hergestellt werden. Die Formmassen können z.B. hergestellt werden, indem man die Ausgangskomponenten in üblichen Mischvorrichtungen wie Schneckenextrudern, vorzugsweise Zweischneckenextrudern, Brabender-Mischern oder Banbury-Mischern sowie Knetern mischt und anschließend extrudiert. Nach der Extrusion wird das Extrudat abgekühlt und zerkleinert. Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Durchmischung zu erhalten, ist eine intensive Durchmischung vorteilhaft. Dazu sind im Allgemeinen mittlere Mischzeiten von 0,2 bis 30 Minuten bei Temperaturen von 280 bis 380°C, bevorzugt 290 bis 370°C, erforderlich. Nach der Extrusion wird das Extrudat in der Regel abgekühlt und zerkleinert.

Die erfindungsgemäß verwendeten Formmassen und die erfindungsgemäßen selbsttragenden Formteile zeichnen sich durch gute Fließfähigkeit, hohe Zähigkeit, vor allem Reißdehnung und Kerbschlagzähigkeit und durch eine hohe Oberflächenqualität aus. Im Hinblick auf die Reißdehnung, Bruchdehnung, Kerbschlagzähigkeit und Chemikalienbeständigkeit weisen die Formmassen und die daraus hergestellten Formteile Werte auf, die im Bereich der vorstehend für das Polybiphenylethersulfon-Polymer angegebenen Werte liegen, so dass die dortigen Ausführungen und Bevorzugungen entsprechend gelten.

Die Herstellung der erfindungsgemäß eingesetzten selbsttragenden Formteile erfolgt durch an sich bekannte Verfahren wie Extrusions-, Spritzgieß-, Spritzblas- oder Spritzstreckblasverfahren.

Es wurde überraschend gefunden, dass die aus der vorstehend beschriebenen Formmasse gefertigten selbsttragenden Formteile zur Konstruktion von Rohrleitungssystemen zur Leitung von Gasen geeignet sind. Die so erhaltenen selbsttragenden Formteile zeichnen sich durch eine sehr gute Dichtigkeit aus. Die selbsttragenden Formteile zeigen eine gegenüber den im Stand der Technik beschriebenen selbsttragenden Formteile zur Leitung von Gasen eine deutlich verringerte Gaspermeabilität (Gaspermeabilität gemessen an einem Gerät der Firma Brugger nach DIN 53380). Die selbsttragenden Formteile und die daraus konstruierten Rohrleitungssysteme sind insbesondere zur Leitung von Methan- und Ethan-haltigen Gasen wie Erdgas geeignet.

Der Begriff "selbsttragend" bedeutet vorliegend, dass die selbsttragenden Formteile im Wesentlichen aus der zur Herstellung verwendeten thermoplastischen Formmasse bestehen.

Unter "im Wesentlichen bestehend aus" wird verstanden, dass das selbsttragende Formteil mindestens 80 Gew.-%, bevorzugt mindestens 90 Gew.-%, besonders bevorzugt mindestens 95 Gew.-% und insbesondere bevorzugt mindestens 99 Gew.-% der zur Herstellung verwendeten thermoplastischen Formmasse erhält. Die Gew.-% sind jeweils bezogen auf das Gesamtgewicht des selbsttragenden Formteils. In einer weiteren besonders bevorzugten Ausführungsform besteht das selbsttragende Formteil aus der zur Herstellung verwendeten thermoplastischen Formmasse.

Der Begriff "selbsttragend" bedeutet darüber hinaus, dass das selbsttragende Formteil neben der zur Herstellung verwendeten thermoplastischen Formmasse keine weiteren Verstärkungsmittel enthält, die zur Erhöhung der mechanischen Stabilität oder der Dichtheit gegenüber Gasen des selbsttragenden Formteils beiträgt. In einer besonders bevorzugten Ausführungsform enthält das selbsttragende Formteil keine Ummantelung. Besonders bevorzugt enthält das selbsttragende Formteil keine Ummantelung aus einem metallischen Material.

Das durch die erfindungsgemäße Verwendung einer thermoplastischen Formmasse hergestellte selbsttragende Formteil ist insbesondere kein Liner, wie er beispielsweise in Rohrleitungssystemen aus metallischen Materialien zum Korrosionsschutz verwendet wird. Gegenstand der vorliegenden Erfindung ist somit auch die Verwendung einer thermoplastischen Formmasse, die mindestens ein Polybiphenylethersulfon-Polymer enthält, zur Herstellung von selbsttragenden Formteilen zur Leitung von Gas, wobei das selbsttragende Formteil im Wesentlichen aus der zur Herstellung verwendeten thermoplastischen Formmasse besteht.

Weiterhin Gegenstand der vorliegenden Erfindung ist somit auch die Verwendung einer thermoplastischen Formmasse, die mindestens ein Polybiphenylethersulfon-Polymer enthält, zur Herstellung von selbsttragenden Formteilen zur Leitung von Gas, wobei das selbsttragende Formteil keine Ummantelung enthält, insbesondere keine Ummantelung aus einem metallischen Material.

Gegenstand der vorliegenden Erfindung ist daher auch die Verwendung von selbsttragenden Formteilen, die aus der vorstehend beschriebenen Formmasse hergestellt sind, zur Leitung von Gasen, wobei die vorstehend genannten Ausführungen und Bevorzugungen im Hinblick auf die Formmasse und das/die in der Formmasse enthaltene(n) Polymer(e) entsprechend gelten.

Weiterhin Gegenstand der vorliegenden Erfindung ist die Verwendung von selbsttragenden Formteilen aus den vorstehend beschriebenen Formmassen zur Leitung von Gasen, wobei die vorstehend genannten Ausführungen und Bevorzugungen im Hinblick auf die Formmasse und das/die in der Formmasse enthaltene(n) Polymer(e) entsprechend gelten.

Weiterhin ist Gegenstand der vorliegenden Erfindung die Verwendung der vorstehend beschrieben selbsttragenden Formteile zur Konstruktion von Rohrleitungssystemen für Gase.

Ein Rohrleitungssystem zur Leitung von Gasen umfasst als Komponenten Rohrstücken, Verbindungsstücken, Abschlussstücke und Rohrleitungsarmaturen, wie Ventilen, Thermometern und Manometern.

Im Rahmen der vorliegenden Erfindung werden selbsttragende Formteile zur Leitung von Gasen Kunststofferzeugnisse verstanden, die aus den vorstehend beschriebenen Formmassen hergestellt worden sind.

Bevorzugt sind die selbsttragenden Formteile ausgewählt aus der Gruppe bestehend aus Rohrstücken, Verbindungsstücken und Abschlusstücken. Als Formteile besonders bevorzugt sind Verbindungsstücke und Abschlussstücke, insbesondere Verbindungsstücke.

Unter Rohrstücken werden im Rahmen der vorliegenden Erfindung beispielsweise gerade Rohrstücke und gebogene Rohrstücke verstanden. Gerade Rohrstücke sind bevorzugt. Die Rohrstücke können beispielsweise durch Extrusions-, Spritzgieß-, Spritzblas- oder Spritzstreckblasverfahren hergestellt werden Die Länge und der Durchmesser der Rohrstücke können in weiten Grenzen variieren und richten sich nach dem geplanten Einsatzbereich.

Verbindungsstücke und Abschlusstücke werden auch als Fittinge bezeichnet.

Als selbsttragende Formteile bevorzugte Fittinge werden z.B. nach DVGW W534 auf ihre Eignung geprüft um z.B Dichtheit und mechanische, thermische Stabilität auf 50 Jahre zu gewährleisten. Die Auslegung bzw. Dimensionierung erfolgt auf Grundlage aus der DIN ISO 9080 ermittelten Kurven und materialspezifischen Dimensionierungsplanung. Die Fittinge können beispielsweise durch Extrusions-, Spritzgieß-, Spritzblas- oder Spritzstreckblasverfahren hergestellt Die Form der Fittinge kann in weiten Grenzen variieren.

Beispielhaft seien Fittinge zur Verbindung von zwei oder mehr Rohrstücken untereinander, Fittinge zur Verbindung von Rohrstücken mit Gasleitungsarmaturen, wie Ventile, Dichtungen, Durchflussmesser, Thermometer oder Manometer und Abschlussstücke zum Verschließen von Öffnungen im Gasrohrleitungssystem, wie Rohrenden genannt. Da die Formteile durch Kunststoffspritzguss hergestellt werden können, besteht im Hinblick auf die Ausgestaltung der Formteile eine große Designfreiheit. Vorteilhaft bei diesem Herstellungsverfahren ist zudem, dass Funktionselemente wie Gewinde, Schnapphaken oder Rastnasen direkt integriert werden können, ohne dass eine Nacharbeitung des Formteils erforderlich ist.

Nachfolgend wird die Erfindung anhand von Ausführungsbeispielen verdeutlicht, ohne sie hierauf zu beschränken.

### Beispiel 1

Messung des Permeationsverhaltens einer Folie, die aus einer Formmasse hergestellt wurde, die zu 100% ein Polybiphenylethersulfon-Polymer der Einheit der Formel (I) besteht. Das gewichtsgemittelte Molekulargewicht (Mw) wurde bei 41.000 g/mol ermittelt. Die eingesetzte Formmasse wird von der BASF SE unter dem Handelsnamen Ultrason P 3010 vertrieben.

Aus der Formmasse wurden Probefolien mit einer Dicke von 50 µm (Ultrason P 3010 Folie 50 µm) und einer Dicke von 100 µm (Ultrason P 3010 Folie 100 µm) hergestellt. Es wurde das Permeationsverhalten gegenüber Methan und gegenüber Ethan gemessen. Messungen erfolgten alle an einem Gerät der Firma Brugger nach der DIN 536380 Teil 1. Diese entspricht der ASTM D 1434 82 und der ISO 15 105 Teil 1.

An beiden Proben wurde für jedes Gas eine Doppelbestimmung durchgeführt. Die Dickeangaben sind ein Mittelwert aus 10 Messpunkten innerhalb der jeweiligen Prüffläche.

Die Ergebnisse sind in den nachfolgenden Tabellen 1 und 2 wiedergegeben.

Es wurden darüber hinaus Probefolien aus Ultrason P3010, einem HDPE (High Density Polyethylen) und einem PE 100 (Polyethylen) mit einer Dicke von jeweils ca. 50 µm hergestellt. Diese Folien, wurden wie vorstehend beschrieben, untersucht. Das Permeationsverhalten gegenüber Methan ist in Tabelle 3 wiedergegeben. Die Meßergebnisse zeigen, dass die erfindungsgemäße Verwendung zu selbsttragenden Formteilen führt, die gegenüber den im Stand der Technik beschriebenen selbsttragenden Formteilen eine erhöhte Dichtigkeit aufweisen.

**Tabelle 1: Methan - Durchlässigkeit trocken (gemessen nach ASTM D1434 82)**

| Material | Probe- nr. | Foliendicke in µm | Transmission Rate | Permeabilität |
|---|---|---|---|---|
| | | | cm³/m²/d 23°C trocken | cm³·1µm/m²/d/bar 23°C trocken |
| Ultrason P 3010 | 1/1 | 50,7 | 1,45E+02 | 7,45E+03 |
| Folie 50 µm | 1/2 | 53,3 | 1,39E+02 | 7,51E+03 |
| Ultrason P 3010 | 2/1 | 89,3 | 6,37E+01 | 5,76E+03 |
| Folie 100 µm | 2/2 | 87,4 | 6,42E+01 | 5,69E+03 |

**Tabelle 2: Ethan - Durchlässigkeit trocken (gemessen nach ASTM D1434 82)**

| Material | Probe- nr. | Foliendicke in µm | Transmission Rate | Permeability |
|---|---|---|---|---|
| | | | cm³/m²/d 23°C trocken | cm³·1µm/m²/d/bar 23°C trocken |
| Ultrason P 3010 | 1/1 | 50,7 | 2,53E+01 | 1,30E+03 |
| Folie 50 µm | 1/2 | 53,3 | 2,22E+01 | 1,20E+03 |
| Ultrason P 3010 | 2/1 | 89,3 | 9,50E+00 | 8,60E+02 |
| Folie 100 µm | 2/2 | 87,4 | 9,80E+00 | 8,68E+02 |

**Tabelle 3: Methan - Durchlässigkeit trocken (gemessen nach ASTM D1434 82)**

| Material | Probenr. | Transmission Rate | Permeability |
|---|---|---|---|
| | | cm³/m²/d 23°C trocken | cm³·1µm/m²/d/bar 23°C trocken |
| Ultrason P 3010 | 1/1 | 7,97E+01 | 7,05E+03 |
| Folie 50 µm | 1/2 | 7,67E+01 | 6,77E+03 |
| HDPE (high density Polyethylen) | 1/1 | 9,40E+02 | 4,79E+02 |
| Folie 50 µm | 1/2 | 8,89E+02 | 5,00E+02 |
| PE100 (Polyethylen) | | | |
| Folie 50 µm | | n. B. | Ca.3,5E+04 |

## Patentansprüche

1. Verwendung einer thermoplastischen Formmasse, die mindestens ein Polybiphenylethersulfon-Polymer enthält, zur Herstellung von selbsttragenden Formteilen zur Leitung von Gas, wobei das Polybiphenylethersulfon-Polymer hergestellt wird durch Polykondensation umfassend gemäß Schritt (a) die Umsetzung einer Komponente (a1), die mindestens eine aromatische Dihydroxyverbindung enthält, mit einer Komponente (a2), die mindestens eine aromatische Sulfonverbindung mit zwei Halogensubstituenten enthält, wobei die Komponente (a1) 4,4'-Dihydroxybiphenyl umfasst.2.

2. Verwendung gemäß Anspruch 1, wobei die Polykondensation gemäß Schritt (a) in Gegenwart eines organischen Lösungsmittels, das N-Methylpyrrolidon enthält, durchgeführt wird.

3. Verwendung gemäß Anspruch 1 oder 2, wobei das molare Verhältnis der Komponenten (a1) zu (a2) von 1,005 bis 1,1 beträgt.

4. Verwendung gemäß einem der Ansprüche 1 bis 3, wobei die Komponente (a1) mindestens 50 Gew.-% 4,4'-Dihydroxybiphenyl enthält.

5. Verwendung gemäß einem der Ansprüche 1 bis 4, wobei die Komponente (a2) ausgewählt aus ist aus 4,4'-Dihalogensufonen, insbesondere aus 4,4'-Dichlordiphenylsuifon und 4,4'-Difluordiphenylsulfon

6. Verwendung gemäß einem der Ansprüche 1 bis 5, wobei Komponente (a1) 4,4'-Dihydroxybiphenyl und Komponente (a2) 4,4'-Dichlordiphenylsufon ist.

7. Verwendung gemäß einem der Ansprüche 1 bis 6, wobei die Formmasse neben dem Polybiphenylethersulfon-Polymer gegebenenfalls mindestens ein weiteres Polymer ausgewählt aus der Gruppe bestehend aus Polyethersulfon (PESU), Polysulfon (PSU), Polyetherimiden, Polyphenylensulfiden, Polyetheretherkelonen, Polyimiden und Poly-p-phenylenen enthält.

8. Verwendung gemäß einem der Ansprüche 1 bis 7, wobei der Gehalt an weiteren Polymeren in der Formmasse maximal 30 Ges.-% bezogen auf das Gesamtgewicht der in der Formmasse enthaltenen Polymere beträgt.

9. Verwendung gemäß einem der Ansprüche 1 bis 8, wobei das selbsttragende Formteil zur Leitung von Gasen keine Ummantelung enthält.

10. Verwendung gemäß einem der Ansprüche 1 bis 9, wobei die selbsttragenden Formteile zur Leitung von Gasen ausgewählt sind aus der Gruppe bestehend aus Rohrstücken und Fittingen.

11. Verwendung von selbsttragenden Formteilen aus Formmassen gemäß einem der Ansprüche 1 bis 10 zur Leitung von Gas.

12. Verwendung von selbsttragenden Formteilen aus Formmassen gemäß einem der Ansprüche 1 bis 11 zur Konstruktion von Rohrleitungssystemen zur Leitung von Gas.

13. Verwendung gemäß einem der Ansprüche 1 bis 12, wobei das Gas Methan und Ethan enthalt.

14. Verwendung gemäß einem der Ansprüche 1 bis 13 wobei das Gas Erdgas ist.

## Claims

1. The use of a thermoplastic molding composition which comprises at least one polybiphenyl ether sulfone polymer, to produce self-supporting moldings for conveying gas, where the polybiphenyl ether sulfone polymer is produced through polycondensation comprising in step (a) the reaction of a component (a1) which comprises at least one aromatic dihydroxy compound with a component (a2) which comprises at least one aromatic sulfone compound having two halogen substituents, where component (a1) comprises 4,4'-dihydroxybiphenyl.

2. The use according to claim 1, where the polycondensation in step (a) is carried out in the presence of an organic solvent which comprises N-methylpyrrolidone.

3. The use according to claim 1 or 2, where the molar ratio (a1) : (a2) of the components is from 1.005 to 1.1.

4. The use according to any of claims 1 to 3, where component (a1) comprises at least 50% by weight of 4,4'-dihydroxybiphenyl.

5. The use according to any of claims 1 to 4, where component (a2) has been selected from 4,4'-dihalo sulfones, in particular from 4,4'-dichlorodiphenyl sulfone and 4,4'-difluorodiphenyl sulfone.

6. The use according to any of claims 1 to 5, where component (a1) is 4,4'-dihydroxybiphenyl and component (a2) is 4,4'-dichlorodiphenyl sulfone.

7. The use according to any of claims 1 to 6, where the molding composition optionally comprises, alongside the polybiphenyl ether sulfone polymer, at least one further polymer selected from the group consisting of polyether sulfone (PESU), polysulfone (PSU), polyetherimides, polyphenylene sulfides, polyether ether ketones, polyimides, and poly-p-phenylenes.

8. The use according to any of claims 1 to 7, where the content of further polymers in the molding composition is at most 30% by weight, based on the total weight of the polymers comprised in the molding composition.

9. The use according to any of claims 1 to 8, where the self-supporting molding for conveying gases comprises no sheathing.

10. The use according to any of claims 1 to 9, where the self-supporting moldings for conveying gases have been selected from the group consisting of fittings and pipe sections.

11. The use of self-supporting moldings made of molding compositions according to any of claims 1 to 10 for conveying gas.

12. The use of self-supporting moldings made of molding compositions according to any of claims 1 to 11 for the construction of piping systems for conveying gas.

13. The use according to any of claims 1 to 12, where the gas comprises methane and ethane.

14. The use according to any of claims 1 to 13, where the gas is natural gas.

## Revendications

1. Utilisation d'un matériau de moulage thermoplastique, qui contient au moins un polymère de polybiphényléthersulfone, pour la fabrication de pièces moulées autoportantes pour la conduite de gaz, le polymère de polybiphényléthersulfone étant fabriqué par polycondensation comprenant selon l'étape (a) la mise en réaction d'un composant (a1), qui contient au moins un composé dihydroxy aromatique, avec un composant (a2), qui contient au moins un composé de sulfone aromatique avec deux substituants halogène, le composant (a1) comprenant du 4,4'-dihydroxybiphényle.

2. Utilisation selon la revendication 1, dans laquelle la polycondensation est réalisée selon l'étape (a) en présence d'un solvant organique qui contient de la N-méthylpyrrolidone.

3. Utilisation selon la revendication 1 ou 2, dans laquelle le rapport molaire entre les composants (a1) et (a2) est de 1,005 à 1,1.

4. Utilisation selon l'une quelconque des revendications 1 à 3, dans laquelle le composant (a1) contient au moins 50 % en poids de 4,4'-dihydroxybiphényle.

5. Utilisation selon l'une quelconque des revendications 1 à 4, dans laquelle le composant (a2) est choisi parmi les 4,4'-dihalogénosulfones, notamment parmi la 4,4'-dichlorodiphénylsulfone et la 4,4'-difluorodiphénylsulfone.

6. Utilisation selon l'une quelconque des revendications 1 à 5, dans laquelle le composant (a1) est le 4,4'-dihydroxybiphényle et le composant (a2) est la 4,4'-dichlorodiphénylsulfone.

7. Utilisation selon l'une quelconque des revendications 1 à 6, dans laquelle le matériau de moulage contient éventuellement en plus du polymère de polybiphényléthersulfone au moins un autre polymère choisi dans le groupe constitué par la polyéthersulfone (PESU), la polysulfone (PSU), les polyéther-imides, les polysulfures de phénylène, les polyétheréthercétones, les polyimides et les poly-p-phénylènes.

8. Utilisation selon l'une quelconque des revendications 1 à 7, dans laquelle la teneur en autres polymères dans le matériau de moulage est d'au plus 30 % en poids, par rapport au poids total des polymères contenus dans le matériau de moulage.

9. Utilisation selon l'une quelconque des revendications 1 à 8, dans laquelle la pièce moulée autoportante pour la conduite de gaz ne contient pas de gaine.

10. Utilisation selon l'une quelconque des revendications 1 à 9, dans laquelle les pièces moulées autoportantes pour la conduite de gaz sont choisies dans le groupe constitué par les tronçons de tubes et les raccords.

11. Utilisation de pièces moulées autoportantes à base de matériaux de moulage selon l'une quelconque des revendications 1 à 10 pour la conduite de gaz.

12. Utilisation de pièces moulées autoportantes à base de matériaux de moulage selon l'une quelconque des revendications 1 à 11 pour la construction de systèmes de canalisations pour la conduite de gaz.

13. Utilisation selon l'une quelconque des revendications 1 à 12, dans laquelle le gaz contient du méthane et de l'éthane.

14. Utilisation selon l'une quelconque des revendications 1 à 13, dans laquelle le gaz est le gaz naturel.
